# EUROPEAN PATENT APPLICATION

(11) **EP 1 990 739 A1**
(43) Date of publication of application: **12.11.2008**
(21) Application number: 07009186.3
(22) Date of filing: 07.05.2007
(51) Int. Cl.: G06F 17/30

(54) **Directory structure implementation system and method**

(71) Applicant: SIEMENS AKTIENGESELLSCHAFT, 80333 München (DE)
(72) Inventor: Malviya, Pankaj, 560034 Bangalore (IN)

(57) **Abstract**

The present invention relates to a system and method for implementing directory structure for a storage media (14). The proposed system includes means for creating a data object (20) in said storage media (14). The means for creating a data object (20) is adapted for writing an entry (22) for said data object (20) on to said storage media (14). The entry (22) comprises an identifier (28) for said data object (20) and an identifier (30) for a parent directory of said data object (20). The proposed system further includes means for obtaining hierarchy information of said data object (20) based upon the identifier (28) for said data object (20) and the identifier (28) for the parent directory of said data object (20). A creating directory structure (62) is created in a temporary storage means (18) from the obtained hierarchy information.

## Description

The present invention generally relates to file-systems in storage media, and in particular, to a system and method to optimize the usage of storage media such as a flash storage media, to provide improved performance.

Flash memory devices are becoming a popular media for mass storage in embedded systems and handheld devices, such as mobile phones, personal digital assistants (PDA), human machine interface (HMI) devices, global positioning systems (GPS), electronic control units (ECU), hand held media player devices, among others. However, flash memory devices have certain characteristics that reduce their lifetime. For example, a memory location in a flash memory device should be erased before anything new is written on to it. Moreover, erasure operation is permissible over a sector. In other words single byte cannot be erased separately. Furthermore, a flash memory can sustain limited number of write and erase operations. Thereafter the media wears out and the reliability of the device is reduced. The above issues also add to the time required to modify the data objects and thus the performance is affected.

As embedded systems are gradually getting sophisticated and feature rich, file-system support in embedded system has become an important requirement. Data objects contained in file-systems are of dynamic nature and they get modified quite often.

Present file-systems implement directories as special files. The contents of this special file (i.e. the directory) include the name of the data object and the corresponding inode number of every data object contained by them. Now whenever a data object is created or is deleted, along with updating the concerned data object, an update of the parent directory is also required. Therefore this approach requires a large number of write operations. In flash devices in-place modification of data is not possible. Hence whenever a data object is created or deleted the space used by the parent directory is marked obsolete and a new directory entry is created for the parent directory. Hence in a running system the amount of space occupied by the obsolete data will increase quickly. To reclaim all the space occupied by the obsolete data a garbage collection has to be done. This operation will reduce the file-system performance to some extent.

It is an object of the present invention to provide an improved system and method for directory structure implementation for a storage media such as a flash memory.

The above object is achieved by a system for implementing directory structure for a storage media, comprising:
- means for creating a data object in said storage media, wherein said means for creating said data object is adapted for writing an entry for a data object on to said storage media, said entry comprising an identifier for said data object and an identifier for a parent directory of said data object, and
- means for obtaining hierarchy information of said data object based upon the identifier for said data object and the identifier for the parent directory of said data object, and for creating a directory structure from the said hierarchy information, wherein said directory structure is created in a temporary storage means.

The above object is achieved by a method for implementing directory structure for a storage media, comprising:
- creating a data object in said storage media, wherein creating said data object further comprises writing an entry for said data object on to said storage media, said entry comprising an identifier for said data object and an identifier for a parent directory of said data object,
- obtaining hierarchy information of said data object based upon the identifier for said data object and the identifier for the parent directory of said data object , and
- creating a directory structure in a temporary storage means, wherein said directory structure is derived from the obtained hierarchy information.

The underlying idea of the present invention is to reduce the number of write operations when a data object is created or modified in a storage media by obviating the need to update the parent directory when a data object is created or deleted. In this approach when a data object is created, its entry will be written to storage media. This entry will contain the identifier of the concerned data object and the identifier of the parent of the concerned data object. Similarly when a data object is deleted, the corresponding entry in the storage media will be deleted. In both the above mentioned cases, the entry of the parent directory in the storage media will not be modified.

In a preferred embodiment, said storage media comprises a flash memory device. The present invention is particularly advantageous improving lifetime of flash memory devices as a result of reduced wearing due to minimal number of write-erase operations on the flash memory device.

In one embodiment, the directory structure created in said temporary storage means comprises a map of data objects in said storage media, said map being generated from the hierarchy information obtained based upon the identifiers of data objects and their parent directories. This map may be used to ascertain the existence of the requested data object and to locate the data object on the storage media. This map will also act as a cache to speed up the access of data objects.

In a preferred embodiment, said temporary storage means comprises a random access memory. This is advantageous in case of frequently changing data in the storage media.

The present invention is further described hereinafter with reference to illustrated embodiments shown in the accompanying drawings, in which:
FIG 1 is a block diagram illustrating functional components of a system in accordance with one embodiment of the present invention,
FIG 2 is a schematic representation of how a data object is stored in a storage media such as flash media,
FIG 3 is a schematic representation of data object packets in a flash media according to an embodiment of the present invention, and
FIG 4 is a schematic representation of the directory structure created in the temporary storage means, obtained based upon hierarchy information of data objects in the storage media.

The embodiments described below relate to the development of a file-system that is specifically designed to optimize the usage of a storage media such as a flash storage media and provide improved performance. The proposed technique is a new approach of lower level implementation of directory structure. The implementation includes the data storage convention and the associated algorithms to access the directory structure.

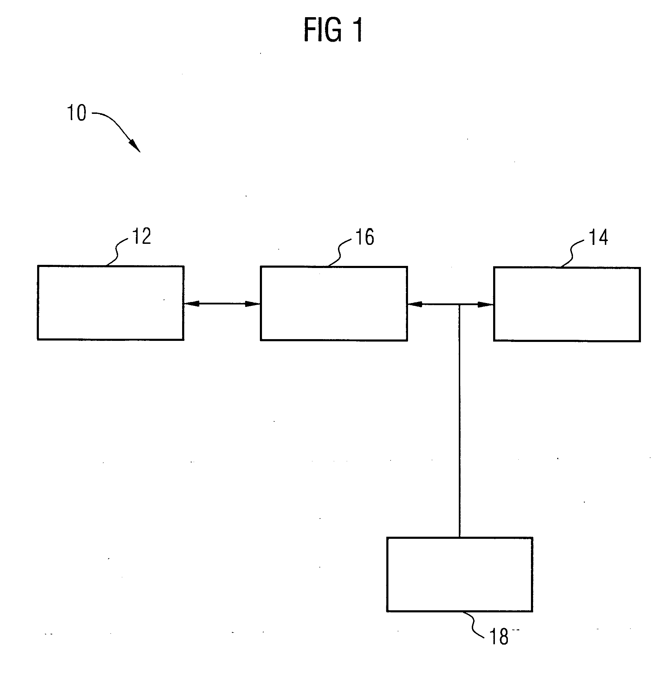

Referring now to FIG 1 of the drawings, in a typical system 10, a processor 12, in combination with its operating system software, is configured to issue a series of read and write commands to read from, and write data to, a flash memory 14 in blocks at specific memory locations. The processor operating system software typically provides the necessary operating support such as a file-system for the flash memory 14. Also included in the system 10 is a flash control system 16 adapted to implement a directory structure in accordance with the embodiments of the present invention described below. A typical system 10 also includes a temporary storage means 18 such as a conventional random access memory (RAM). It will be appreciated that the functions of the flash control system 16 may be carried out in software, firmware, or hardware, and that the flash control system 16 may not exist as a separate physical unit as suggested in FIG 1.

In the context of the present discussion, the term 'data object' refers to a file or a directory.

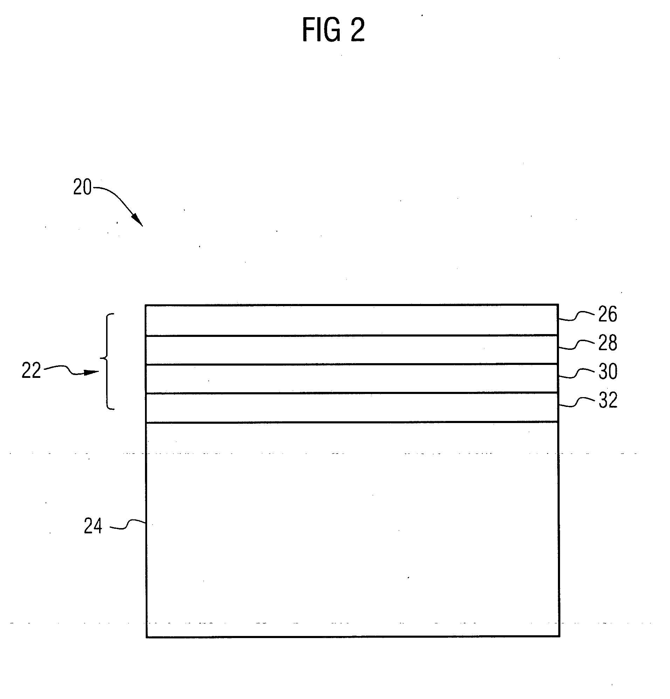

FIG 2 schematically illustrates how, in accordance with the present invention, a data object 20 is stored in a storage media such as a flash memory. Each data object in the storage media may be stored as one or more packets. As shown, a packet of the data object 20, as stored in the storage media, comprises metadata 22 that includes a name 28 of the data object 20 (i.e. file name or directory name, as the case may be). Metadata 22 further includes a unique identifier 38 of the data object 20, and a unique identifier 30 for a parent directory of the data object 20. Additionally, metadata 22 may further include other information 32 such as, for example, permissions for the data object 20. When the data object is a file, in addition to the metadata 22, the packet also comprises actual file data 24.

In the proposed approach, when a data object is created, an entry will be written on to the storage media comprising the metadata of that data object. This entry will hence comprise the identifier of the concerned data object and the identifier of the parent of the concerned data object as discussed above. Similarly when a data object is deleted, the corresponding entry in the storage media will be deleted. In both the above mentioned cases, the entry of the parent directory in the storage media will not be modified. This is because, according to the inventive principle, on the storage media, a parent directory entry does not contain any information about the data objects contained within. The required number of write operations will hence be reduced to the half.

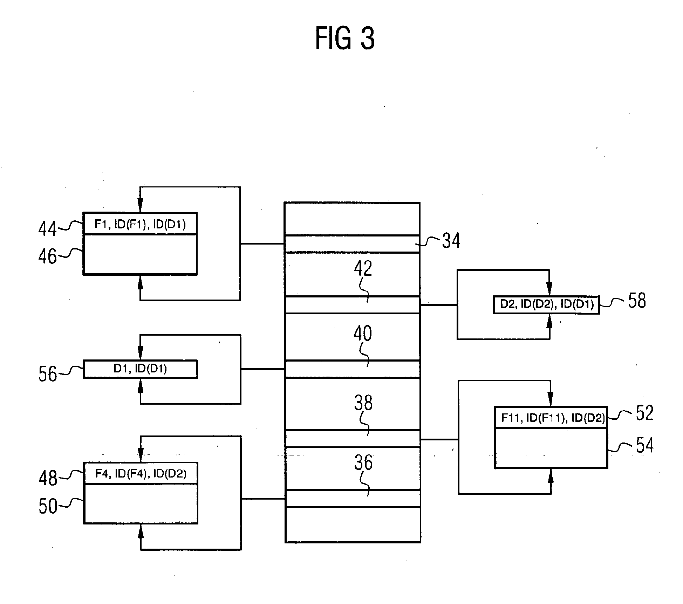

FIG 3 is an exemplary representation of data object packets in a storage media such as a flash memory. In the shown example, F1, F4 and F11 are files stored respectively as packets 34, 36, and 38 in the storage media, while D1 and D2 are directories stored as packets 40 and 42 in the storage media. As can be seen, the packet 34 for the file F1 comprises metadata 44 and file data 46. In the shown example, the parent directory for the file named F1 is directory D1. The metadata 44 thus includes the filename F1, the file identifier ID(F1) and the identifier ID(D1) of the parent directory D1. Similarly, the packet 36 for the file F4 comprises metadata 48 and file data 50, wherein the metadata 48 comprises the identifier ID(D2) of the parent directory D2, in addition to the file name F4 and the file identifier ID(F4). The packet 38 for the file F11 comprises metadata 52 and file data 54, wherein the metadata 52 comprises the identifier ID(D2) of the parent directory D2, of the file F11, in addition to the file name F11 and the file identifier ID(F11). For the directory named D2, the packet 42 comprises metadata 58 comprising the directory name D2, the directory identifier ID(D2) and identifier ID (D1) of its parent directory D1. In the shown embodiment, the directory D1 is at the highest level of the directory structure. The packet 40 for directory D1 accordingly comprises metadata 56 indicating that the directory D1 has no parent directory.

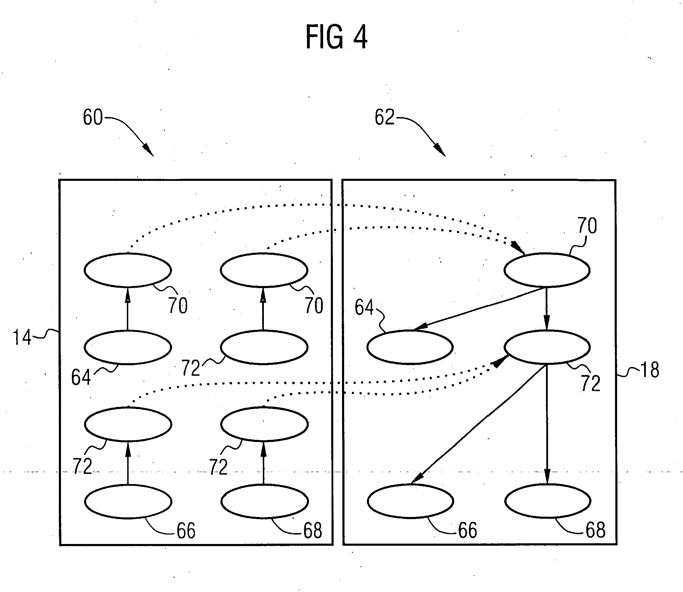

As discussed above, on the storage media, every data object contains the identifier of its immediate parent directory. When the file-system is initialized / mounted, entire storage media is scanned for data objects. Whenever a valid data object is found in the storage media, the hierarchy information contained in it is retrieved. This hierarchy information is then used to create a directory structure of the data objects. The directory structure may be in the form of a map containing the hierarchy information of all the data objects in the storage media. This map will store frequently changing data and may be stored in any temporary storage means, including the flash memory itself. In accordance with the illustrated embodiment, the map so generated is stored in a RAM. This map may be used to ascertain the existence of the requested data object and to locate the data object on the storage media. This map also acts as a cache to speed up the access of data objects. An exemplary map of data objects in accordance with an embodiment of the present invention is illustrated in FIG 4.

FIG 4 represents the map of data objects created in the temporary storage means, obtained based on hierarchy information of data objects shown in FIG 3. The data objects F1, F4, F11, D1 and D2 are herein represented respectively by the reference numerals 64, 66, 68, 70 and 72. Based upon the hierarchy information from the metadata of the data objects in FIG 3, a directory structure, indicated by the reference numeral 60, may be created in the storage media. As illustrated, this directory structure 60 contains discrete information obtained from individual data objects.

The directory structure indicated by the reference numeral 62 is the data structure that will be present in the RAM after the file-system is mounted completely. This directory structure 62 is the map created based on the hierarchy information of all valid data objects found upon mounting /initializing the file-system. Creation of the data object map in RAM is done by re-organizing the hierarchy information retrieved from the individual data objects. The process of creation of the data object map may also include some temporary data structures in RAM (not shown in FIG 4). As mentioned, this map may be used to ascertain the existence of the requested data object and to locate the data object on the storage media.

As will be appreciated, several advantages may be realized by the proposed approach of implementing the directory structure as discussed above. First, the lifetime of the flash storage media will increase as a result of reduced wearing due to minimal number of write-erase operations on the flash device. Further, performance of the file-system will improve because of reduced number of write and erase operations and reduced garbage collection overheads. The proposed approach also improves the integrity of the data objects as the creation and deletion of data objects does not require modification a of parent data object. Moreover, using the proposed approach, all file-system operations will be truly atomic as only the concerned data object will get modified. Also, creation and deletion of data objects will not add to the problem of consumption of space by obsolete data. Therefore the garbage collection routine will be invoked lesser number of times.

In order to illustrate the above-described benefits, let us consider an example of a flash file-system is described where ten data objects are created and deleted every hour. First, the case of a file-system model which uses the conventional approach to directory structure implementation is considered. The tasks involved may be simplified by suggesting the minimal operations that take place:
1. Creation or deletion of a data object require one write operation on the concerned data object
2. Creation or deletion of the data object require one write operation to modify the parent of the concerned data object
3. After every 100 write operations file-system executes erase operation to reclaim the space occupied by obsolete data objects
Considering these assumptions after 1000 working hours the file-system will execute 20000 write operations and 200 erase operations.

According to the invention, for implementing directory structure, the second requirement to modify the parent becomes needless. Therefore after 1000 working hours, the file-system will execute 10000 write operations and 100 erase operations.

Hence the wear of flash media is effectively reduced to half. The reclamation process is also invoked half the times it is invoked in normal case. Therefore the response time for creating/deleting the data object is improved. Integrity of file-system and atomicity of the file operations are also improved by not modifying the parent data object.

Summarizing, the present invention relates to a system and method for implementing directory structure for a storage media. The proposed system includes means for creating a data object in said storage media. The means for creating a data object is adapted for writing an entry for a data object on to said storage media. The entry comprises an identifier for said data object and an identifier for a parent directory of said data object. The proposed system further includes means for obtaining hierarchy information of said data object based upon the identifier for said data object and the identifier for the parent directory of said data object. A creating directory structure is created in a temporary storage means from the obtained hierarchy information.

Although the invention has been described with reference to specific embodiments, this description is not meant to be construed in a limiting sense. Various modifications of the disclosed embodiments, as well as alternate embodiments of the invention, will become apparent to persons skilled in the art upon reference to the description of the invention. It is therefore contemplated that such modifications can be made without departing from the spirit or scope of the present invention as defined.

## Claims

1. A system for implementing directory structure for a storage media (14), comprising:
- means for creating a data object (20) in said storage media (14), wherein said means for creating a data object (20) is adapted for writing an entry (22) for said data object (20) on to said storage media (14), said entry (22) comprising an identifier (28) for said data object (20) and an identifier (30) for a parent directory of said data object (20), and
- means for obtaining hierarchy information of said data object based upon the identifier (28) for said data object (20) and the identifier (30) for the parent directory of said data object (20), and for creating a directory structure (62) from the said hierarchy information, wherein said directory structure is created in a temporary storage means (18).

2. The system according to claim 1, wherein said storage media (14) comprises a flash memory device.

3. The system according to any of the preceding claims, wherein the directory structure (62) created in said temporary storage means (18) comprises a map of data objects in said storage media (14), said map being generated from the hierarchy information obtained based upon the identifiers of data objects and their parent directories.

4. The system according to any of the preceding claims, wherein said temporary storage means (18) comprises a random access memory.

5. A method for implementing directory structure for a storage media (14), comprising:
- creating a data object (20) in said storage media (14), wherein creating said data object (20) further comprises writing an entry (22) for said data object (20) on to said storage media (14), said entry (22) comprising an identifier (28) for said data object (20) and an identifier (30) for a parent directory of said data object (20),
- obtaining hierarchy information of said data object (20) based upon the identifier (28) for said data object (20) and the identifier (30) for the parent directory of said data object (20), and
- creating a directory structure (62) in a temporary storage means (18), wherein said directory structure (62) is derived from the obtained hierarchy information.

6. The method according to claim 5, wherein said storage media (14) comprises a flash memory device.

7. The method according to any of claims 5 and 6, wherein the directory structure (62) created in said temporary storage means (18) comprises a map of data objects in said storage media (14), said map being generated from the hierarchy information obtained based upon the identifiers of data objects and their parent directories.

8. The method according to any of claims 5-7, wherein said temporary storage means (18) comprises a random access memory.
